# FASCICULE DE BREVET EUROPEEN

(11) **EP 2 401 588 B1**
(45) Date de publication et mention de la délivrance du brevet: **21.08.2019**
(21) Numéro de dépôt: 10708239.8
(22) Date de dépôt: 16.02.2010
(51) Int. Cl.: G01F 15/00, E03B 7/07, F16K 31/04, F16K 35/02, F16K 37/00

(54) **DISPOSITIF DE SURVEILLANCE D'UN POINT DE COMPTAGE D'EAU**
EINRICHTUNG ZUM ÜBERWACHEN EINES WASSERZÄHLERS
DEVICE FOR MONITORING A WATER METER

(30) Priorité: 25.02.2009 FR 0900849
(43) Date de publication de la demande: 04.01.2012
(73) Titulaire: Hydrelis, 62360 Isques (FR)
(72) Inventeur: SARTORIUS, Thierry, F-62152 Hardelot plage (FR)
(74) Mandataire: Tournel, Jean Louis
(86) Numéro de dépôt international: PCT/FR2010/000130
(87) Numéro de publication internationale: WO 2010/097521

(56) Documents cités:
- CN-Y- 2 425 246
- CN-Y- 201 093 094

## Description

L'invention se rapporte à un procédé de surveillance d'un point de comptage d'eau.

Elle se rapporte également aux moyens de surveillance pour la mise en oeuvre du procédé.

La distribution d'eau nécessite de comptabiliser le volume d'eau délivré afin d'émettre une facture correspondant à la consommation.

Il est donc connu d'équiper le circuit de distribution d'eau, par exemple, d'une maison d'un compteur d'eau disposé en amont du circuit d'eau propriété de la maison.

En règle générale, on dispose en amont du compteur, un robinet d'arrêt et souvent en aval du compteur on y positionne un clapet anti-pollution.

De plus en plus souvent, les compteurs non accessibles depuis l'extérieur sont pourvus d'un dispositif de télé-relève que l'on monte sur le compteur.

Certaines sociétés utilisent cette télé-relève pour tenter de déceler les fuites d'eau. C'est ainsi par exemple, qu'en relevant la consommation tous les jours et par comparaison avec les consommations antérieures, on peut déceler une anomalie et déclencher une alerte.

On connait des dispositifs plus performants pour analyser le débit et par exemple le brevet FR 2.847.339 décrit une installation comprenant un capteur de débit, une électronique de surveillance et une vanne commandée par l'électronique afin de couper l'eau automatiquement.

Une telle installation n'est malheureusement pas systématiquement utilisée par les sociétés de distribution de l'eau préférant utiliser les compteurs d'eau classiques qui sont homologués et dont la pose est bien connue de leur service.

On connait FR-A- 2.889.855 un kit de renouvellement de compteur sans intervention sur les conduites existantes consistant en un compteur d'eau à impulsions à faible entraxe et une électrovanne pilotée l'ensemble étant choisi pour s'insérer dans l'entraxe des conduites existantes. Il est fait mention d'une électronique pour détecter les anomalies de consommation et de commande de fermeture de l'électrovanne mais sans précision sur le montage.

La fraude à la consommation d'eau est bien connue. Elle consiste, par exemple, à retourner le compteur ou à le retirer en le remplaçant par une courte conduite provisoire.

Pour prévenir et signaler ce type de fraude les raccords équipant les compteurs sont protégés par des capsules de protection couvrant les écrous. L'accès aux écrous n'est possible qu'en brisant la capsule ce qui signale alors l'infraction.

Pour constater l'infraction, il vaut visualiser sur place la rupture de la capsule.

Sur les appareils avec télé-relève, certains désolidarisent le module de lecture ou coupent le fil électrique en espérant que l'exploitant ne se rendra pas compte de cette modification car en principe il inspecte très rarement les compteurs.

Certains individus cherchent à modifier les informations en agissant sur l'électronique qui reçoit et analyse les informations de comptage et ensuite adresse celles-ci au fournisseur d'eau.

On connait une installation CN2425246 comprenant un boitier fermé par un couvercle verrouillé par des verrous manoeuvrés par un électroaimant activé par une carte. C'est une simple commande de verrouillage et non un circuit de surveillance.

L'invention va tenter de minimiser la fraude.

Elle vise également la simplicité de montage en limitant les travaux de pose et les interventions ultérieures.

A cet effet, l'invention a pour objet un procédé de surveillance d'un point de comptage d'eau ce point de comptage comprenant une vanne motorisée avec son moyen moteur électrique logé dans une enveloppe qui est, par des moyens mécaniques de liaison, associée mécaniquement à un élément de fermeture amovible le dit procédé étant caractérisé en ce qu'on surveille l'accès aux moyens mécaniques de liaison ou la manoeuvre de ces moyens mécaniques et on ferme la vanne avant même la séparation de l'élément de fermeture de l'enveloppe.

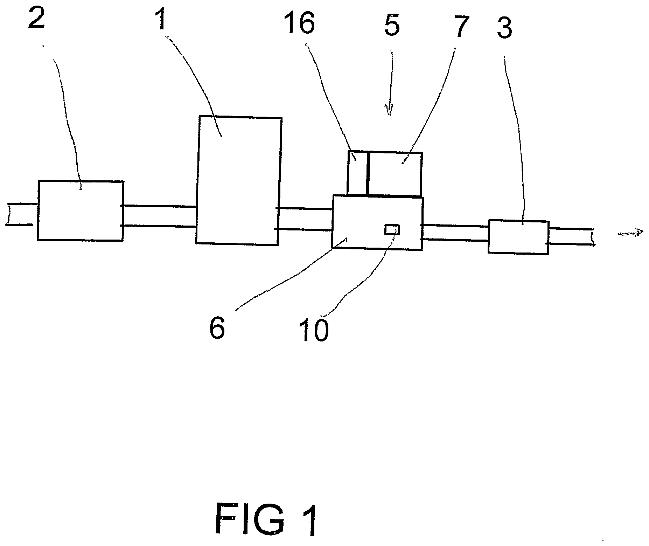

L'invention sera bien comprise à l'aide de la description ci après faite à titre d'exemple non limitatif en regard du dessin qui représente schématiquement
FIG 1: un point de comptage d'eau
FIG 2: un dispositif de surveillance selon l'invention
FIG 3 : une variante du dispositif selon la figure 2

En se rapportant au dessin, on voit un point de comptage d'eau. Il comporte un compteur 1 d'eau, par exemple apte à émettre des impulsions, un robinet d'arrêt 2 en amont du compteur et en aval un moyen antipollution 3.

Il comporte en plus un dispositif 5 de surveillance comprenant une vanne 6 motorisée avec son moyen moteur 6A électrique (par exemple une bobine déplaçant un axe de clapet) logé dans une enveloppe 16 et un élément de fermeture 7 amovible rapporté sur la dite enveloppe par des moyens 8 mécaniques d'association tel des vis 8. On note que cet élément de fermeture, par exemple, à la forme d'un boitier 7 couvrant alors les contacts 30 électriques du moteur manoeuvrant la vanne et logeant de l'électronique mais il pourrait simplement s'agir d'un couvercle.

Cet élément de fermeture est, dans une forme de réalisation, un boitier 7 qui loge une électronique 9 de commande de la manoeuvre de la vanne en réponse soit à des ordres reçus via une transmission ou encore à des circonstances déterminées par l'électronique analysant via un capteur un débit de fuite.

Le moteur de la vanne présente pour sa commande des contacts 30 électriques accessibles sur une des faces de l'enveloppe 16 qui loge le dit moteur et l'axe de manoeuvre du clapet. Ces contacts sont destinés à alimenter la bobine par l'intermédiaire du circuit électronique logé dans le boitier 7.

Avantageusement, l'élément de fermeture 7 amovible tel un boitier est conçu pour recouvrir et dissimuler les contacts 30 électriques du moteur de la vanne, il est associé au moins indirectement à la vanne par des moyens d'association permettant son montage et son démontage et
un moyen 10 de détection surveille l'intégrité de l'association mécanique entre l'élément de fermeture 7 et l'enveloppe 16 logeant la vanne motorisée.

On surveille l'accès aux moyens mécaniques utilisés pour cette association de sorte que la détection vise la période qui précède le moment où on va dévisser les vis utilisées pour cette association élément de fermeture/enveloppe. On peut également surveiller la manoeuvre de ces moyens mécaniques.

On surveille l'intégrité de l'association entre l'élément de fermeture et au moins indirectement la vanne et avant séparation de l'élément de fermeture, on ferme la vanne et/ou on signale la dite opération. La fermeture de la vanne et le signalement de cette tentative d'accès seront souvent réalisés en même temps. Pour signaler, on peut envoyer un signal hertzien mais également inscrire cette action dans une mémoire interrogeable.

Lorsque l'élément 7 de fermeture est un boitier ouvert sur une face, il peut contenir une partie de l'électronique de commande. L'enveloppe 16 est également ouverte sur une face, celle qui sera obturée par le boitier 7.

Ainsi, l'accès à l'électronique et/ou aux contacts du moteur de la vanne est protégé. La réouverture de la vanne ne sera possible qu'après avoir, par exemple envoyé un code.

Le boitier 7 est fixé sur une enveloppe 16 contenant le moteur 6A de la vanne 6.

Le moyen 10 de détection surveille l'accès au moyen 8 mécanique d'association du boitier sur l'enveloppe ou la manoeuvre.

Pour cela, d'une part, l'accès au moyen 8 mécanique d'association qui maintient le boitier sur la vanne est protégé par un cache tel une coiffe 11 et, d'autre part, la coiffe agit sur un détecteur 10A de présence de la dite coiffe. Ce cache dissimule les têtes de vis.

Le retrait (mouvement) de la coiffe pour l'accès aux vis de fixation de l'élément de fermeture ou du boitier sur l'enveloppe 16 de la vanne va ainsi être détecté et provoquer différentes opérations tel l'émission d'une alarme et/ou la fermeture immédiate de la vanne. Ainsi, avant d'être intervenu sur les vis ou moyens équivalents pour séparer le boitier de l'enveloppe, le mouvement de la coiffe qui protège l'accès au vis aura déclenché une ou plusieurs opérations.

Selon la programmation de l'électronique, on peut émettre un signal via une transmission signalant cette action de déplacement de la coiffe. On peut mémoriser cette action d'ouverture dans une mémoire afin de pouvoir la lire ultérieurement. On peut également provoquer la fermeture de la vanne qui ne pourra être ouverte que par l'intervention du gestionnaire du réseau de distribution.

Ce choix de détection de l'accès aux vis de fixation va laisser du temps pour effectuer une ou plusieurs opérations avant l'accès effectif au circuit.

Pour détecter la manoeuvre de la vis, celle-ci lors de son vissage peut venir pousser un contacteur qui ouvre ou ferme un circuit.

Les moyens 8 d'association mécaniques sont accessibles depuis l'extérieur de l'enveloppe.

Ce délai peut être important lorsque l'alimentation du moteur de la vanne se fait avec une pile dont la capacité reste faible par rapport à une alimentation secteur car cela permet de charger une capacité délivrant ensuite l'énergie suffisante pour manoeuvrer le moteur de la vanne. En effet avec une batterie de faible puissance instantanée la commande de l'électrovanne ne peut se faire qu'au moyen d'un circuit intermédiaire accumulant suffisamment d'énergie.

La manoeuvre de la coiffe va déclencher la charge d'une capacité qui va être utilisée ensuite pour actionner l' électrovanne avant séparation du boitier.

Par batterie, on comprendra des éléments de faible encombrement tel des piles du commerce qui auront la taille d'une batterie de téléphone portable.

En utilisant une vanne avec son actionneur du type bistable, on pourra limiter la consommation électrique car l'énergie électrique n'est sollicitée que pour le changement d'état fermé ou ouvert.

Le moyen de détection de la tentative d'ouverture est, par exemple, constitué par un aimant 10B porté par la coiffe et un contacteur 10A type « I.L.S » logé dans le boitier, ledit contacteur ouvrant ou fermant un circuit de surveillance suivant la proximité de l'aimant. L'aimant 10B est fixé dans le fond de la coiffe, à l'intérieur pour être invisible, et ferme le contact lorsque la coiffe est presque totalement engagée. On pourra choisir un autre type de contacteur avec un montage similaire qui pourrait être mécanique.

Le boitier est à section polygonale ici sensiblement un carré. Chaque coin du carré est pourvu d'une vis d'association et pour son montage une fraction des arêtes du boitier est tronquée pour le passage de la lame du tournevis. La coiffe vient se glisser sur le boitier et le pied de la coiffe vient en appui sur les têtes de vis 8 pour interdire ainsi l'accès aux vis

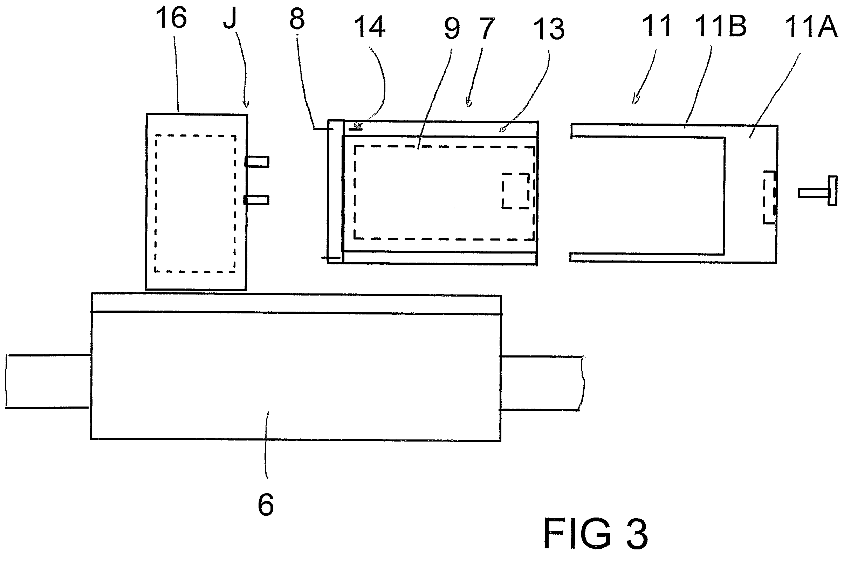

Dans une forme de réalisation (figure 3), la coiffe 11 comporte une tête 11A et des jambes 11B destinées se positionner au niveau des arêtes du boiter et plus précisément dans l'exemple, à occuper les parties tronquées des quatre arêtes et ces jambes coopèrent avec le boitier au moyen de glissières 13 et l'extrémité libre de chaque jambe s'engage dans une empreinte 14 en sorte de solidariser les jambes au boitier.

La coiffe est ensuite fixée sur le boitier au moyen d'un rivet 15 placé au niveau de la tête. On laisse ainsi supposer que seul le rivet est une sécurité.

Le plan de joint J entre le boitier et l'enveloppe 16 du moteur de la vanne sera pourvue d'un joint d'étanchéité.

Le boitier 7 vient en outre dissimuler des vis de montage du corps de la vanne en sorte que le démontage de la vanne ne peut se faire sans le démontage du boitier.

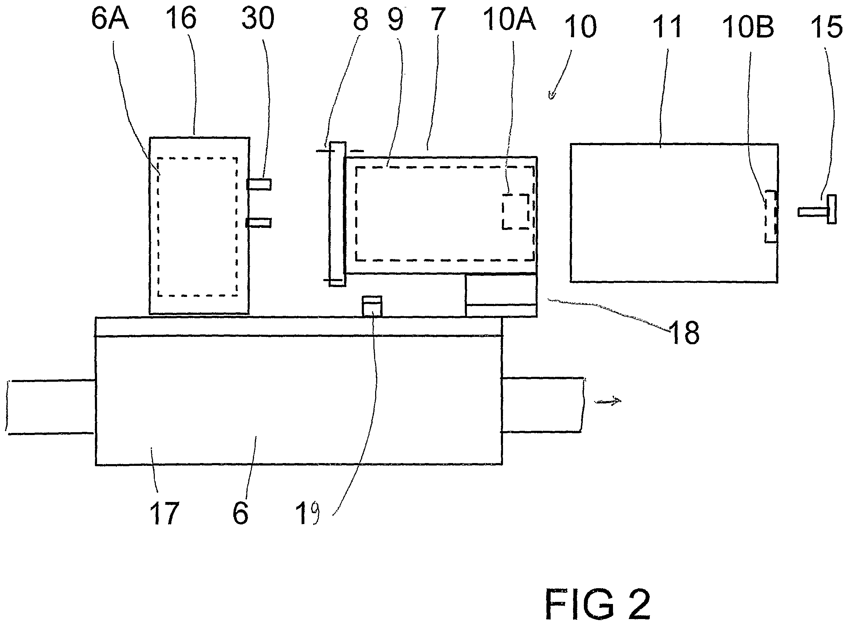

Selon les formes de la vanne, le boitier 7 est non seulement associé à l'enveloppe 16 contenant la bobine du moteur de la vanne mais également au corps 17 de la vanne. Ici (figure 2) on a prévu sur le boitier 7, une 18 des deux fractions 18,19 d'une glissière et une pièce 20 qui, pourvue de la deuxième fraction 19 de glissière, est rapportée sur le corps de la vanne.

Le boitier présente un connecteur pour le relier au compteur afin de recevoir l'information sur la quantité d'eau et la traiter ensuite. Au moins un émetteur interne ou externe sera chargé d'établir une transmission.

Un moyen surveille si la liaison électrique provenant du compteur est en place sur le connecteur du boitier et si le boitier est relié à un émetteur extérieur, la liaison sera également surveillée.

De préférence, l'émetteur hertzien sera logé dans le boitier.

L'électronique de commande est autonome et le boitier loge donc une source d'énergie.

Le boitier contiendra donc l'électronique de commande du moteur de la vanne, les moyens de surveillance de l'accès aux vis 8, les moyens d'analyse du débit, la batterie, l'émetteur récepteur. L'enveloppe 16 contiendra le moteur de la vanne.

## Revendications

1. Procédé de surveillance d'un point de comptage d'eau, ce point de comptage comprenant une vanne (6) motorisée avec son moyen moteur électrique logé dans une enveloppe (16) qui est fermée par un élément de fermeture (7) à l'aide de moyens (8) d'association mécaniques, le dit procédé étant **caractérisé en ce que** les moyens d'association 8 mécaniques accessibles à l'extérieur de l'enveloppe 16 sont protégés par une coiffe (11) et on surveille l'accès aux dits moyens (8) d'association mécaniques par la surveillance du mouvement de la coiffe 11 et s'il y a mouvement de la coiffe on déclenche une ou plusieurs opérations avant même la séparation de l'élément de fermeture (7) de l'enveloppe (16).

2. Procédé de surveillance d'un point de comptage d'eau selon la revendication 1 **caractérisé en ce qu'**après avoir détecté le mouvement de la coiffe et avant d'ouvrir l'enveloppe, on signale la manoeuvre de la dite coiffe.

3. Procédé de surveillance d'un point de comptage d'eau selon la revendication 1 ou 2 **caractérisé en ce que** la manoeuvre de la coiffe déclenche la charge d'une capacité qui est utilisée ensuite pour provoquer la fermeture de l'électrovanne avant séparation du boitier 7 de l'enveloppe en sorte que la vanne ne pourra être ouverte que par l'intervention du gestionnaire du réseau de distribution.

4. Dispositif de surveillance d'un point de comptage d'eau, ce dispositif comprenant une vanne motorisée (6) avec son moyen moteur électrique logé dans une enveloppe (16) fermée par un élément de fermeture (7) amovible qui est fixé par des moyens (8) mécaniques d'association, le dit dispositif étant **caractérisé en ce qu'**il comprend une coiffe 11 protégeant les moyens 8 mécaniques d'association et un moyen (10) de détection qui surveille le mouvement de la coiffe 11 et donc l'accès aux moyens (8) mécaniques d'association , ce moyen de détection étant un détecteur de présence constitué par un contacteur, et il comprend également des moyens électroniques adaptés à déclencher une ou plusieurs opération en cas de mouvement de la coiffe.

5. Dispositif de surveillance d'un point de comptage selon la revendication 4 **caractérisé en ce que** la coiffe porte un aimant actionnant le contacteur.

6. Dispositif de surveillance d'un point de comptage d'eau selon l'une quelconque des revendications 4 à 5 **caractérisé en ce que** l'élément de fermeture 7 en forme de boitier (7) vient en outre dissimuler des vis de montage du corps (17) de la vanne motorisée (6) en sorte que le démontage de la vanne ne peut se faire sans le démontage du boitier (7).

7. Dispositif de surveillance d'un point de comptage d'eau selon la revendication 6 **caractérisé en ce que** le boitier (7) est non seulement associé mécaniquement à l'enveloppe (16) contenant le moteur de la vanne mais également au corps (17) de la vanne motorisée (6).

8. Dispositif de surveillance selon l'une quelconque des revendication 4 a 7 **caractérisé en ce qu'**il comprend une batterie pour alimenter une électronique de commande de la vanne motorisée .

9. Dispositif de surveillance selon la revendication 8 **caractérisé en ce qu'**il comprend une capacité qui est utilisée pour actionner la vanne motorisée.

## Patentansprüche

1. Verfahren zur Überwachung einer Wasserzählstelle, wohin die Zählstelle ein motorisches Ventil (6) mit dessen elektrischem Antriebsmittel umfasst, welches in einem Mantel (16) angeordnet ist, welcher mittels mechanischer Verbindungsmittel (8) durch ein Verschlusselement (7) verschlossen ist, wobei das Verfahren **dadurch gekennzeichnet ist, dass** die außerhalb des Mantels (16) zugänglichen mechanischen Verbindungsmittel (8) durch eine Haube (11) geschützt sind und der Zugang zu den mechanischen Verbindungsmitteln (8) durch die Überwachung der Bewegung der Haube (11) überwacht wird und bei einer Bewegung der Haube bereits vor der Abtrennung des Verschlusselements (7) von dem Mantel (16) ein oder mehrere Vorgänge ausgelöst werden.

2. Verfahren zur Überwachung einer Wasserzählstelle gemäß Anspruch 1, **dadurch gekennzeichnet, dass** nach Feststellen der Bewegung der Haube und vor dem Öffnen des Mantels die Hantierung der Haube angezeigt wird.

3. Verfahren zur Überwachung einer Wasserzählstelle gemäß Anspruch 1 oder 2, **dadurch gekennzeichnet, dass** das Hantieren an der Haube das Laden einer Kapazität auslöst, welche anschließend genutzt wird, um das Verschließen des elektrischen Ventils vor der Abtrennung des Gehäuses (7) von dem Mantel derart zu bewirken, dass das Ventil nur durch die Intervention des Verteilungsnetzbetreibers geöffnet werden kann.

4. Vorrichtung zur Überwachung einer Wasserzählstelle, die ein motorisches Ventil (6) mit dessen elektrischem Antriebsmittel umfasst, welches in einem Mantel (16) angeordnet ist, der durch ein abnehmbares, von mechanischen Verbindungsmitteln (8) festgelegtes Verschlusselement (7) verschlossen ist, wobei die Vorrichtung **dadurch gekennzeichnet ist, dass** sie eine Haube (11) umfasst, welche die mechanischen Verbindungsmittel (8) und ein Anzeigemittel (10) schützt, welches die Bewegung der Haube (11) und somit den Zugang zu den mechanischen Verbindungsmitteln (8) überwacht, wobei dieses Anzeigemittel ein aus einem Kontaktschalter bestehender Anwesenheitsdetektor ist und dass sie auch elektronische Mittel umfasst, welche dazu geeignet sind, im Falle einer Bewegung der Haube einen oder mehrere Vorgänge auszulösen.

5. Vorrichtung zur Überwachung einer Zählstelle gemäß Anspruch 4, **dadurch gekennzeichnet, dass** die Haube einen Magneten umfasst, der den Kontaktschalter betätigt.

6. Vorrichtung zur Überwachung einer Wasserzählstelle gemäß einem der Ansprüche 4 bis 5, **dadurch gekennzeichnet, dass** das Verschlusselement (7) in Form eines Gehäuses (7) außerdem Montageschrauben für den Körper des motorischen Ventils (17) derart verbirgt, dass der Abbau des Ventils nicht ohne den Abbau des Gehäuses (7) vorgenommen werden kann.

7. Vorrichtung zur Überwachung einer Wasserzählstelle gemäß Anspruch 6, **dadurch gekennzeichnet, dass** das Gehäuse (7) nicht nur mechanisch mit dem den Ventilmotor umfassenden Mantel (16) verbunden ist, sondern auch mit dem Körper (17) des motorischen Ventils (6).

8. Vorrichtung zur Überwachung gemäß einem der Ansprüche 4 bis 7, **dadurch gekennzeichnet, dass** sie eine Batterie zur Versorgung einer Steuerelektronik des motorischen Ventils umfasst.

9. Vorrichtung zur Überwachung gemäß Anspruch 8, **dadurch gekennzeichnet, dass** sie eine Kapazität umfasst, die zur Betätigung des motorischen Ventils genutzt wird.

## Claims

1. A method for monitoring a water metering point, said metering point comprising a motorised valve (6), the electric motor means of which are housed in a casing (16) that is closed by a closure element (7) using mechanical connection means (8), said method being **characterised in that** the mechanical connection means (8) accessible from outside the casing (16) are protected by a cover (11) and access to said mechanical connection means (8) is monitored by monitoring the movement of the cover (11) and, if the cover moves, one or more operation(s) is/are triggered even before the closure element (7) is separated from the casing (16).

2. The method for monitoring a water metering point as claimed in claim 1, **characterised in that**, after detecting the movement of the cover and before opening the casing, the manoeuvring of said cover is indicated.

3. The method for monitoring a water metering point as claimed in claim 1 or 2, **characterised in that** the manoeuvring of the cover triggers the charging of a capacitor that is subsequently used to cause the solenoid valve to close before the housing (7) is separated from the casing so that the valve can only be opened by the intervention of the distribution system operator.

4. A device for monitoring a water metering point, said device comprising a motorised valve (6), the electric motor means of which are housed in a casing (16) that is closed by a detachable closure element (7) that is fastened by mechanical connection means (8), said device being **characterised in that** it comprises a cover 11 protecting the mechanical connection means (8) and a detection means (10) that monitors movement of the cover 11 and therefore access to the mechanical connection means (8), said detection means being a presence detector formed by a contactor, and it also comprises electronic means adapted to trigger one or more operation(s) in the event of movement of the cover.

5. The device for monitoring a water metering point as claimed in claim 4, **characterised in that** the cover supports a magnet activating the contactor.

6. The device for monitoring a water metering point as claimed in any one of claims 4 to 5, **characterised in that** the closure element (7) in the form of a housing (7) further conceals screws for assembling the body (17) of the motorised valve (6) so that the valve cannot be disassembled without disassembling the housing (7).

7. The device for monitoring a water metering point as claimed in claim 6, **characterised in that** the housing (7) is not only mechanically connected to the casing (16) containing the valve motor, but also to the body (17) of the motorised valve (6).

8. The monitoring device as claimed in any one of claims 4 to 7, **characterised in that** it comprises a battery for powering an electronic unit for controlling the motorised valve.

9. The monitoring device as claimed in claim 8, **characterised in that** it comprises a capacitor that is used to activate the motorised valve.
